# EUROPÄISCHE PATENTSCHRIFT

(11) **EP 1 994 714 B1**
(45) Veröffentlichungstag und Bekanntmachung des Hinweises auf die Patenterteilung: **22.07.2009**
(21) Anmeldenummer: 07704106.9
(22) Anmeldetag: 24.01.2007
(51) Int. Cl.: H04L 29/06

(54) **VERFAHREN ZUR ZUORDNUNG VON ZUMINDEST EINER NUTZDATENVERBINDUNG ZU ZUMINDEST EINER MULTIPLEXVERBINDUNG**
METHOD FOR ALLOCATING AT LEAST ONE USER DATA LINK TO AT LEAST ONE MULTIPLEX CONNECTION
PROCÉDÉ D'ATTRIBUTION D'AU MOINS UNE LIAISON DE DONNÉES UTILISATEUR À AU MOINS UNE CONNEXION MULTIPLEX

(30) Priorität: 27.01.2006 EP 06001745
(43) Veröffentlichungstag der Anmeldung: 26.11.2008
(60) Teilanmeldung: 09005128.5
(73) Patentinhaber: SIEMENS AKTIENGESELLSCHAFT, 80333 München (DE)
(72) Erfinder: BELLING, Thomas, 85435 Erding (DE)
(86) Internationale Anmeldenummer: PCT/EP2007/050674
(87) Internationale Veröffentlichungsnummer: WO 2007/085606

(56) Entgegenhaltungen:
- WO-A-03/024052
- ANONYMOUS: "BICC IP Bearer control protocol" INTERNATIONAL TELECOMMUNICATION UNION. GENEVA, CH, Juli 2001 (2001-07), XP017402651
- 3GPP: "Core network Nb data transport and transport signalling" 3GPP TS 29.414, Dezember 2005 (2005-12), XP002388731 3GPP, 3rd Generation Partnership Project

## Beschreibung

Die Erfindung betrifft ein Verfahren zur Zuordnung von zumindest einer Nutzdatenverbindung zu zumindest einer zwischen einem ersten Netzwerkelement und einem zweiten Netzwerkelement vorgesehenen Multiplexverbindung.

Zur Übertragung von Sprachdaten über ein mobiles Kommunikationssystem bzw. Mobilfunksystem werden zunehmend paketorientierte Datenübertragungsverfahren eingesetzt, bei denen abhängig vom jeweils verwendeten Übertragungsprotokoll unterschiedliche Größen aufweisende Datenfelder zur Übertragung der komprimierten Sprachdaten bereitgestellt werden. Als Übertragungsprotokolle werden meist "Layer-2"-Übertragungsprotokolle wie beispielsweise das Ethernet-Protokoll, sowie das Internet Protokoll (IP)-Protokoll, das "User Datagram Protocol" (UDP)-Protokoll (RFC 768), das "Realtime Transport Protocol" (RTP)-Protokoll (RFC 3550) und in manchen Fällen auch das "Iu Framing Protocol" (IuFP)-Protokoll (3GPP TS 29.415) verwendet.

Beispielsweise wird in der so genannten CS-Domäne des Kernnetzes ("Core Network") eines Mobilfunksystems der dritten Generation (3GPP) zur Datenübertragung beispielsweise zwischen einer so genannten Media-Gateway-Einheit (MGWs) und/oder einem "Mobile Switching Center" (MSC) bzw. Mobilvermittlungseinheit eine so genannte "Nb"-Datenverbindung aufgebaut. Die zu übertragenden Sprach- oder Multimediadaten werden beispielsweise mittels einer "Adaptive Multi-Rate" (AMR) Sprachkodiereinheit komprimiert und anschließend die komprimierten Sprachdaten über das "Iu Framing Protocol" (IuFP)-Protokoll (3GPP TS 29.415) oder das RTP-, UDP- oder IP-Protokoll übertragen (siehe hierzu Standard 3GPP TS 29.414).

Die Datenfelder der jeweiligen Übertragungsprotokolls, also die jeweiligen "Header", sind zusammen häufig wesentlich größer als die darin übertragenen Daten, wie beispielsweise komprimierte Sprachdaten. Beispielsweise weist das Datenfeld eines IP-Datenpaketes eine Größe von 20 Byte (IP Version 4.0) bzw. 40 Byte (IP Version 6.0) auf. Die Datenfelder des UDP-Protokolls besitzen eine Größe von 8 Byte, wohingegen die Datenfelder des RTP-Protokolls 16 Byte und diejenigen des IuFP-Protokolls 4 Byte umfassen. Unterschiedlich hierzu weisen die über die AMR-Sprachkodiereinheit komprimierten Daten einer Größe von 35 Byte im "12.2 kHz"-Mode oder eine Größe von 5 Byte im zwischen Sprachpausen verwendeten "Silence Indication" (SID)-Mode auf.

Zwischen zumindest zwei Mobilvermittlungseinheiten oder zwei Media-Gateway-Einheiten werden in der Regel gleichzeitig mehrere Nutzdatenverbindungen, wie beispielsweise Telefonverbindungen übertragen, beispielsweise gemäß dem Standard für die so genannte NB Schnittstelle. Analog zur Nb-Schnittstelle kann die Datenübertragung über die ebenfalls in einem 3GPP Mobilfunksystem vorgesehenen "Iu"-Schnittstelle erfolgen, welche zwischen einer Media-Gateway-Einheit oder einer Mobilvermittlungseinheit und einer so genannten "Radio Network Controller" (RNC)-Einheit (siehe hierzu 3GPP TS 25.414 sowie 25.415) besteht.

Gemäß den derzeitig bestehenden Standards wird über die Nb-oder Iu-Schnittstelle für jedes zu übertragende Nutzdatenverbindung, beispielsweise für ein Telefongespräch eine eigene physikalische getrennte gemäß dem jeweiligen Übertragungsprotokoll IP/UDP/RTP-Datenverbindung realisierte Datenverbindung aufgebaut, über welche die gemäß dem jeweiligen IP-,UDP- und RTP-Übertragungsprotokoll aufgebaute Datenpakete übertragen werden.

Sowohl im Rahmen der Nb- als auch der Iu-Schnittstelle werden das IP-, UDP- und RTP-Protokoll jeweils an der angrenzenden Media-Gateway-Einheit und der angrenzenden Mobilvermittlungseinheit bzw. der angrenzenden RNC-Einheit terminiert, d.h. die Datenfelder der einzelnen über die Nb- oder Iu-Datenverbindung übertragenen Datenpakete weisen zumindest teilweise Übereinstimmungen auf und werden in den genannten Einheiten im Anschluss an die Übertragung ausgelesen und weiterverarbeitet. Unterschiedlich hierzu werden die Datenfelder von gemäß dem IuFP-Protokoll realisierten Datenpaketen durch die jeweilige Media-Gateway-Einheit oder Mobilvermittlungseinheit unverändert weitergereicht.

Ferner sind auf dem Gebiet der Übertragungstechnologie eine Vielzahl von Multiplextechnologien bekannt, über welche Daten von mehreren Nutzdatenverbindungen annähernd gleichzeitig mittels einer gemultiplexten Datenverbindung übertragen werden. Derartige zur Übertragung von mehreren Nutzdatenverbindungen bzw. Telefonverbindungen vorgesehene Datenverbindungen werden im Folgenden als Multiplexverbindungen bezeichnet.

An der Nb oder Iu Schnittstelle ist es vorteilhaft, Daten mehrere Nutzdatenverbindungen gemeinsam innerhalb einer vorzugsweise mittels der IP/UDP/RTP Protokolle transportierten Multiplexverbindung zu übertragen. Damit könnten in einem IP Packet, das jeweils nur einen IP, UDP und RTP Header enthält, Daten mehrerer Nutzdatenverbindungen enthalten sein, jeweils vorzugsweise mit eignem IuFP Header und eignen Nutzdaten wie beispielsweise komprimierten Sprachdaten. Dadurch könnte die nötige Bandbreite zum Transport erheblich verringert werden. Allerdings ist diese Möglichkeit noch nicht im Standard beschrieben.

Zum Aufbau einer Nutzdatenverbindung über eine Nb-Datenverbindung wird das so genannte "BICC IP Bearer Control Protocol" (IPBCP)-Protokoll (ITU-T Q.1970) vorgesehen, welches seinerseits das so genannte "Session Description Protocol" (SDP)-Protokoll (IETF RFC 2327) verwendet (siehe hierzu 3GPP TS 29.414). Das IPBCP-Protokoll sieht zum Aufbau einer Nutzdatenverbindung zwischen einer ersten und zweiten Media-Gateway-Einheit die Übertragung einer "IPBCP-Request-Nachricht" von der ersten zur zweiten Media-Gateway-Einheit vor. Durch die zweite Media-Gateway-Einheit wird diese Nachricht mittels einer "IPBCP-Response-Nachricht" beantwortet. Mittels der genannten IPBCP-Nachrichten tauschen die erste und zweite Media-Gateway-Einheit untereinander Ihre jeweiligen IP-Adressen und UDP-Port-Nummern aus, deren Kenntnis zum Austausch von Daten zwischen der ersten und zweiten Media-Gateway-Einheit erforderlich ist. Die IPBCP-Nachrichten werden mittels des so genannten BICC-Signalisierungsprotokolls (ITU-T Q.1902.1-5) transparent übertragen.

Die Aufgabe der Erfindung liegt darin, ein Verfahren zur Zuordnung von zumindest einer Nutzdatenverbindungen zu einer zwischen zumindest einer ersten Netzwerkelement und zumindest einem zweiten Netzwerkelement vorgesehenen Multiplexverbindung anzugeben, bei dem die zur Übertragung der Nutzdaten, beispielsweise Sprachdaten erforderliche Übertragungsbandbreite deutlich reduziert ist. Die Aufgabe wird ausgehend von dem Oberbegriff des Patentanspruches 1 durch dessen kennzeichnende Merkmale gelöst.

Der wesentliche Aspekt des erfindungsgemäßen Verfahrens ist darin zu sehen, dass durch das erste Netzwerkelement eine erste Signalisierungsnachricht erzeugt und an das zweite Netzwerkelement übertragen wird, wobei durch die erste Signalisierungsnachricht dem zweiten Netzwerkelement die Bereitschaft des ersten Netzwerkelementes zum Transport der zumindest einen Nutzdatenverbindung über jeweils eine Multiplexverbindung angezeigt wird. Abhängig von der angezeigten Bereitschaft des ersten Netzwerkelementes und davon, ob der Transport der zumindest einen Nutzdatenverbindung über eine Multiplexverbindung durch das zweite Netzwerkelement unterstützt wird, ordnet das zweite Netzwerkelement jeder der zumindest einen Nutzdatenverbindungen jeweils entweder einer Multiplexverbindung zwischen dem ersten Netzwerkelement und dem zweiten Netzwerkelement zu oder wählt für diese Nutzdatenverbindung einen Transport außerhalb einer Multiplexverbindung. Durch eine im zweiten Netzwerkelement erzeugte und an das erste Netzwerkelement übertragene zweite Signalisierungsnachricht wird dem ersten Netzwerkelement die mögliche Zuordnung der zumindest einen Nutzdatenverbindung zu einer Multiplexverbindung angezeigt wird. Vorteilhaft ist es beim erfindungsgemäßen Verfahren nicht erforderlich, dass das die Zuordnung initiierende erste Netzwerkelement den Zielknoten der Nutzdatenverbindung kennt. Somit kann auch das standardisierte IPBCP-Protokoll, bei dem die von einem ersten Netzwerkelement übertragene IPBCP-Request-Nachricht meist ohne Kenntnis der diese empfangenden zweiten Netzwerkelement gesendet wird, oder das ebenfalls standardisierte SIP-Signalisierungsprotokoll um das erfindungsgemäße Verfahren erweitert werden. Durch den Aufbau der jeweiligen Nutzdatenverbindung über eine Multiplexverbindung können insbesondere komprimieret Sprachdaten mittels einer deutlich reduzierten Bandbreite übertragen werden.

Vorteilhaft ist es beim erfindungsgemäßen Verfahren auch nicht erforderlich, neue Nachrichten im IPBCP Protokoll einzuführen, sondern die bestehenden Nachrichten müssen nur geeignet erweitert werden.

Weiterhin vorteilhaft ermöglicht das erfindungsgemäßen Verfahren wahlweise den Transport einer Nutzdatenverbindung zwischen einem ersten Netzwerkelement, das den Transport von Daten über eine Multiplexverbindung unterstützt, und einem zweiten Netzwerkelement, das gemäß bestehenden Standard nur den Transport von Nutzdatenverbindungen außerhalb von Multiplexverbindungen unterstützt.

Vorzugsweise berücksichtigt das zweite Netzwerkelement bei der Auswahl der Multiplexverbindung, ob in der Multiplexverbindung genug freie Ressourcen für die neue Nutzdatenverbindung vorhanden sind, wie beispielsweise eine freie Adressinformation für die Nutzdatenverbindung.

Falls das IPBCP-Protocoll verwendet wird, wird beim Aufbau jeder Nutzdatenverbindung gesondert eine so genannte IPBCP-Request-Nachricht und eine IPBCP-Response-Nachricht ausgetauscht. In der IPBCP-Request-Nachricht gibt das erste Netzwerkelement nach bestehendem Standard seine IP-Adresse sowie eine UDP Port Nummer an. Zur Angabe, dass der Transport einer Nutzdatenverbindung über eine Multiplexverbindung gewünscht wird, wird ein neue gebildetes SDP Attribut eingeführt. Alternativ wird ein neuer "MIME" Parameter für den in TS 29.414 definierten MIME-Type des IuFP-Protokolls verwendet.

Im Falle das das zweite Netzwerkelement den Transport von Nutzdatenverbindungen über Multiplexverbindungen nicht unterstützt, ignoriert das zweite Netzwerkelement gemäß bestehendem SDP-Standard das neue ihr unbekannte SDP Attribut bzw. den neuen MIME Parameter und richtet gemäß bestehendem IPBCP Standard eine einzeln transportierte Nutzdatenverbindung zur angegebenen IP Adresse und Port Nummer ein. Die nötige Abwärtskompatibilität ist somit gegeben.

Im Falle das das zweite Netzwerkelement zwar den Transport von Nutzdatenverbindungen über Multiplexverbindungen unterstützt, aber für die gegebene Nutzdatenverbindung entscheidet, kein Multiplexing anzuwenden, sendet das zweite Netzwerkelement ebenso eine IPBCP-Response-Nachricht gemäß bestehendem Standard ohne erfindungsgemäße Erweiterungen.

Ein zweite Netzwerkelement, das Multiplexing unterstützt, wählt beim Empfang der IPBCP-Request-Nachricht mit der Angabe, dass Multiplexing gewünscht ist, eine Multiplexverbindung hin zu der in der IPBCP-Request-Nachricht angegeben IP Adresse aus. Die Multiplexverbindung kann alternativ auch zu einem anderen Port als dem in der IPBCP-Request-Nachricht angegebenen Port führen.

Das zweite Netzwerkelement teilt dem ersten Netzwerkelement in der IPBCP-Response-Nachricht mit, dass Multiplexing gewählt wurde und gibt die ausgewählte Multiplexverbindung vorzugsweise mittels der UDP Port Nummer an, welche die zweite Netzwerkelement zum Empfang der Multiplexverbindung verwendet. Zur Angabe, dass Multiplexing gewählt wird, kann ein neues SDP Attribut verwendet werden, beispielsweise dasselbe neue SDP Attribut wie in der IPBCP-Request-Nachricht zur Angabe, dass Multiplexing gewünscht wird, verwendet wird. Alternativ wird zur Angabe, dass Multiplexing gewählt wird, ein neuer "MIME" Parameter für den in TS 29.414 definierten MIME Type des IuFP verwendet, beispielsweise der selbe neue Parameter wie in der IPBCP-Request-Nachricht. Die Angabe der zum Empfang der Multiplexverbindung verwendeten Port-Nummer in MGW-B kann innerhalb der die Nutzdatenverbindung beschreiben so genannten SDP "Media" Zeile erfolgen, oder aber mit Hilfe eines neuen SDP Attributs oder MIME Type Parameters.

Weiterhin vorteilhaft ermöglicht das erfindungsgemäße Verfahren die Zuweisung einer eindeutige Kennung zur Nutzdatenverbindung innerhalb der Multiplexverbindung. Diese Kennung kann beispielsweise innerhalb der Datenpakete der Multiplexverbindung jeweils einem transportierten Datenpaket der Nutzdatenverbindung zugeordnet angegeben werden, um somit auszudrücken, zu welcher Nutzdatenverbindung das transportierte Datenpaket gehört.

Vorzugsweise weist das zweite Netzwerkelement nach Auswahl einer Multiplexverbindung der ihr neu zugeordneten Nutzdatenverbindung eine weitere Kennung zu, welche innerhalb der Multiplexverbindung eindeutig ist, und teilt für jede neu zugeordnete Nutzdatenverbindung die ausgewählte weitere Kennung dem ersten Netzwerkelement in der Nachricht mit, in der das zweite Netzwerkelement für jede Nutzdatenverbindung ausdrückt, ob und zu welcher Multiplexverbindung sie zugeordnet wird.

Diese Kennung kann dann beispielsweise innerhalb der Datenpakete der Multiplexverbindung jeweils einem transportierten Datenpaket der Nutzdatenverbindung zugeordnet angegeben werden, um somit auszudrücken, zu welcher Nutzdatenverbindung das transportierte Datenpaket gehört. Vorzugsweise wird hierbei für eine Nutzdatenverbindung dieselbe Kennung sowohl für von dem ersten Netzwerkelement zum zweiten Netzwerkelement gesandte Datenpakete wie für von zweiten Netzwerkelement zum ersten Netzwerkelement gesandte Datenpakete verwendet.

Für SDP, wie bei IPBCP verwendet, erfolgt die Angabe der Kennung vorzugsweise mit Hilfe eines neuen SDP Attributs oder MIME Type Parameters, beispielsweise des Attributs bzw. Parameters, welcher ausdrückt, dass Multiplexing verwendet wird.

Vorteilhaft wird sobald eine Nutzdatenverbindung beendet wird, die bisher für diese Nutzdatenverbindung verwendete Kennung einer anderen der Multiplexverbindung neu zugeordneten Nutzdatenverbindung zugewiesen. Um zu vermeiden, dass dieselbe Kennung zufällig gleichzeitig von dem ersten und zweiten Netzwerkelement unterschiedlichen neuen Nutzdatenverbindungen innerhalb der selben Multiplexverbindung zugewiesen wird, ist es vorteilhaft, wenn dem ersten und zweiten Netzwerkelement unterschiedliche Wertebereiche zur Vergabe der Kennung zugeteilt bekommen. Beispielsweise kann dasjenige Netzwerkelement, welches zuerst einer neuen Multiplexverbindung eine Nutzdatenverbindung zuweist, dadurch den unteren Wertebereich zugewiesen bekommen, während das andere Netzwerkelement, der von Netzwerkelment über die Zuordnung dieser Nutzdatenverbindung eine Nachricht erhält, mittels dieser Nachricht den oberen Wertebereich zugewiesen bekommt.

Daneben wird durch das erfindungsgemäße Verfahren vorteilhaft die Einrichtung neuer Multiplexverbindungen unterstützt, insbesondere dann wenn noch keine für die Nutzdatenverbindung geeignete bestehende Multiplexverbindung vorhanden ist. Ein derartiges automatisches und dynamisches Einrichten von Multiplexverbindungen vereinfacht den Betrieb eines Kommunikationssystems erheblich.

Entsprechend ist es beim Erhalt der Nachricht von ersten Netzwerkelement, welches eine Adresse enthält und ausdrückt, dass die Zuordnung von Nutzdatenverbindung(en) zu einer oder mehreren Multiplexverbindung(en) gewünscht ist, vorteilhaft, wenn das zweite Netzwerkelement im Falle, dass noch keine geeignete Multiplexverbindungen zur angegebenen Adresse vorhanden ist oder aber in den bestehenden Nutzdatenverbindungen keine Ressourcen mehr vorhanden sind, eine neue Multiplexverbindung zur angegebenen Adresse aufgebaut und den Nutzdatenverbindungen zuweist.

Vorzugsweise erfolgt der Aufbau der neuen Multiplexverbindung dadurch, dass das zweite Netzwerkelement in der Nachricht an das erste Netzwerkelement eine bisher noch nicht vorhandene Multiplexverbindung bezeichnet, beispielsweise mittels einer bisher noch nicht verwendeten UDP Port Nummer des zweiten Netzwerkelementes. das erste Netzwerkelement erkennt beim Empfang der Nachricht des zweiten Netzwerkelementes daran, dass ein neuer Adressinformation verwendet wird, dass eine neue Multiplexverbindung verwendet wird. Vorzugsweise gibt zuvor das erste Netzwerkelement in der Nachricht an das zweite Netzwerkelement eine freie UDP Port Nummer des ersten Netzwerkelementes an, und das zweite Netzwerkelement verwendet diese UDP Port Nummer, um Daten in einer neu aufgebauten Multiplexverbindung an das erste Netzwerkelement zu senden. Wenn das zweite Netzwerkelement eine bereits bestehende Multiplexverbindung auswählt, verwendet das zweite Netzwerkelement dagegen eine andere Portnummer des ersten Netzwerkelementes, die bereits vorher dieser Multiplexverbindung zugeordnet war. Vorzugsweise wird eine Multiplexverbindung abgebaut, sobald die letzte darin transportierte Nutzdatenverbindung beendet wird.

Die Vorliegende Erfindung ist auch für andere Netze geeignet, die das so genannte "Session Initiation Protocol" -Protokoll (IETF RFC 3261) als Signalisierung Vorsehen, und bei denen zwischen denselben Netzwerkelementen viele Nutzdatenverbindungen ausgetauscht werden, wie zum Beispiel das so genannte "Internet Multimedia Subsystem" (IMS), in der von ETSI TISPAN standardisierten Weise genützt wird. Zur Beschreibung der Nutzdatenverbindungen wird auch hier das SDP-Protokoll verwendet, das gemäß dem so genannten "SDP-offer-answer" Mechanismus (IETF RFC 3264) mittels einer so genannten SDP-offer-Nachricht und einer darauf folgenden SDP-answer-Nachricht ausgetauscht wird, die mit der IPBCP-Request- bzw. IPBCP-Response-Nachricht vergleichbar sind.

Weitere vorteilhafte Ausbildungen des erfindungsgemäßen Verfahrens sind den weiteren Patentansprüchen zu entnehmen.

Im Folgenden wird das erfindungsgemäße Verfahren an einem Ausführungsbeispiel sowie mehreren Figuren näher erläutert.
Es zeigen:
- Fig. 1: beispielhaft in einem schematischen Blockschaltbild die zur Ausführung des erfindungsgemäßen Verfahrens zusammenwirkenden Netzkomponenten eines mobilen Kommunikationssystems,
- Fig. 2: beispielhaft in schematischer Darstellung den Aufbau eines Datenpaketes einer erfindungsgemäßen Multiplexverbindung,
- Fig. 3: beispielhaft in schematischer Darstellung einen alternativen Aufbau eines Datenpaketes einer erfindungsgemäßen Multiplexverbindung und
- Fig. 4: beispielhaft in einem schematischen Blockschaltbild die Netzarchitektur eines IMS basierten Kommunikationssystems.

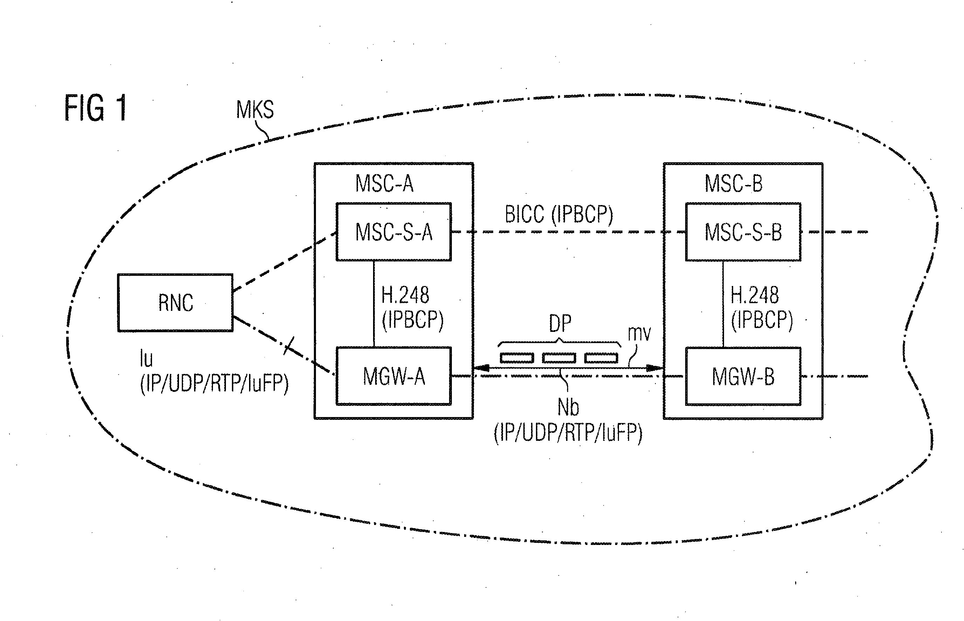

In Figur 1 ist beispielhaft in einem schematischen Blockschaltbild ein erstes Netzwerkelement, insbesondere ein Netzknoten MSC-A und ein zweites Netzwerkelement, insbesondere ein Netzknoten MSC-B eines mobilen Kommunikationssystems MKS dargestellt, wobei der erste und zweite Netzknoten MSC-A, MSC-A in einer bevorzugten Ausführungsform als Mobilvermittlungseinheiten ausgebildet sind.

Der erste Netzknoten MSC-A weist beispielsweise bei dem in Figur 1 dargestellten Ausführungsbeispiel eine erste MSC-Server-Einheit MSC-S-A und eine erste Media-Gateway-Einheit MGW-A auf. Analog hierzu weist der zweite Netzknoten MSC-B eine zweite MSC-Server-Einheit MSC-S-B und eine zweite Media-Gateway-Einheit MGW-B auf. Die mittels getrennter Einheiten, und zwar der ersten und zweiten MSC-Server-Einheit MSC-S-A sowie der ersten und zweiten Media-Gateway-Einheit MGW-A, MGW-B realisierten Server- und Media-Gateway-Funktionalitäten können alternativ auch jeweils in einer gemeinsamen Einheit realisiert sein.

Der erste und zweite Netzknoten MSC-A, MSC-B bzw. dessen erste und zweite Media-Gateway-Einheit MGW-A, MGW-B sind im vorliegenden Ausführungsbeispiel über die eine "Nb"-Schnittstelle miteinander verbunden, die zur Übertragung von Datenpaketen DP einer aufzubauenden Nutzdatenverbindung das IP-, UDP-, RTP- und IuFP-Protokoll verwendet.

Erfindungsgemäß wird an der "Nb"-Schnittstelle zumindest eine Multiplexverbindungen mv zur Übertragung von zumindest einer Nutzdatenverbindung vorgesehen. Ferner besteht eine BICC-Signalisierungsverbindung zwischen der ersten und zweiten MSC-Server-Einheit MSC-S-A, MSC-S-B, wobei die erste und zweite MSC-Server-Einheit MSC-S-A, MSC-S-B über eine auf dem ITU-T H.248-Protokoll basierende Signalisierungsverbindung mit der ersten bzw. zweiten Media-Gateway-Einheit MGW-A, MGW-B verbunden ist und diese hierüber kontrolliert. Sowohl durch die BICC-Signalisierungsverbindung als auch durch die H.248-Signalisierungsverbindung wird das "BICC IP Bearer Control Protocol" (IPBCP)-Protokoll unterstützt.

Darüber hinaus ist der erste Netzknoten MSC-A bzw. die erste MSC-Server-Einheit MSC-S-A und die erste Media-Gateway-Einheit MGW-A mittels der so genannten "Iu"-Schnittstelle bzw. einer "Iu"-Datenverbindung mit einer "Radio-Network-Controller" (RNC)-Einheit verbunden. Auch durch die Iu-Datenverbindung wird zur Übertragung der Datenpaketes einer Nutzdatenverbindung das IP-, UDP-, RTP- und IuFP-Protokoll verwendet.

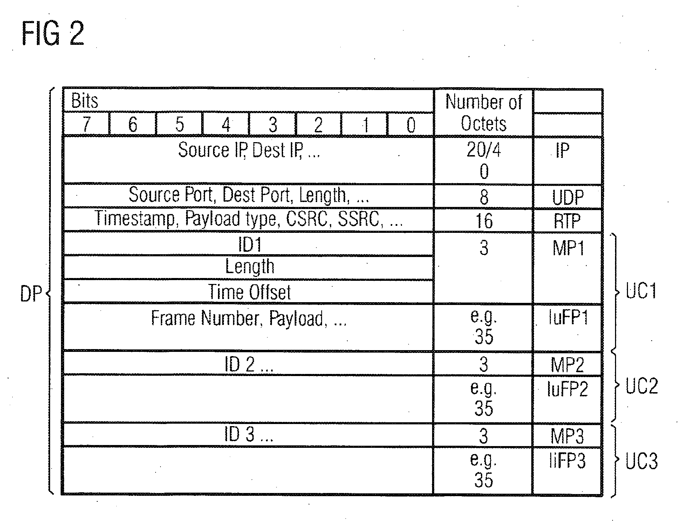

In Figur 2 ist beispielhaft der Aufbau eines Datenpaketes DP einer erfindungsgemäßen Multiplexverbindung mv dargestellt, welche beispielsweise über die Nb-Datenverbindung bzw. Nb-Schnittstelle übertragen wird. Das Datenpaket DP ist zur Multiplexdatenübertragung von beispielsweise einer ersten bis dritten Nutzdatenverbindungen UC1, UC2, UC3 vorgesehen.

Das Datenpaket DP weist hierzu lediglich jeweils ein IP-, UDP- und RTP-Datenfeld IP, UDP, RTP auf, wohingegen die Nutzdaten der ersten bis dritten Nutzdatenverbindungen UC1, UC2, UC3 jeweils in einem getrennt voneinander angeordneten Datenfeld IuFP1 bis IuFP3 übertragen werden, das jeweils vorzugsweise Daten des IuFP sowie die Nutzdaten der ersten, zweiten, bzw. dritten Nutzdatenverbindung UC1, UC2, UC3, enhält. Die Nutzdaten können jeweils beispielsweise gemäß dem AMR-Verfahren kodierte Sprachinformationen sein.

Vorzugsweise wird für jede Nutzdatenverbindung UC1 bis UC3 auch jeweils ein Multiplexdatenfeld MP1, MP2, MP3 eingefügt, das zumindest eine erste bis dritte Kennung ID1, ID2, ID3, die innerhalb der Multiplexverbindung die jeweilige Nutzdatenverbindung UC1, UC2 bzw. UC3 bezeichnet, sowie ggf. weitere Informationen hinsichtlich der Länge der jeweils übertragenen Nutzdaten und/oder ein Zeitstempel enthalten. Auch können ein erstes bis drittes IuFP-Datenfeld IuFP1, IuFP2, IuFP3 vorgesehen sein

Im Folgenden wird beispielhaft eine mittels des "Session Description Protocol" (SDP)-Protokolls enkodierte IPBCP-Request-Nachricht und IPBCP-Response-Nachricht näher beschrieben, welche beispielsweise zwischen den in Abbildung 1 dargestellten ersten und zweiten Netzknoten MSC-A, MSC-B, insbesondere zwischen der ersten und zweiten Media-Gateway-Einheit MGW-A, MGW-B ausgetauscht werden.

| IPBCP-Request-Nachricht (MGW-A -> MGW-B): | |
|---|---|
| Rq1 | c=IN IP4 host.anywhere.com |
| Rq2 | m=audio 49170 RTP/AVP 97 |
| Rq3 | a=rtpmap:97 VND.3GPP.IUFP/16000 |
| Rq4 | a=fmtp:97 multiplex |

| IPBCP-Response-Nachricht (MGW-B -> MGW-A): | |
|---|---|
| Rp1 | c=IN IP4 host.example.com |
| Rp2 | m=audio 49320 RTP/AVP 97 |
| Rp3 | a=rtpmap:97 VND.3GPP.IUFP/16000 |
| Rp4 | a=fmtp:97 multiplex; user_connection_id=11 |

Die IPBCP-Request-Nachricht wird in der ersten Media-Gateway-Einheit MGW-A des ersten Netzknotens MSC-A erzeugt und an die zweite Media-Gateway-Einheit MGW-B des zweiten Netzknotens MGW-B übertragen. Durch die in vierten Zeile Rq4 der IPBCP-Request-Nachricht angegebenen Multiplexkennung "multiplex" des MIME-Types des IuFP-Protokolls wird durch die erste Media-Gateway-Einheit MGW-B der zweiten Media-Gateway-Einheit MGW-B angezeigt, dass die Zuordnung der in der IPBCP-Request-Nachricht angegebenen Nutzdatenverbindung zu einer Multiplexverbindung mv gewünscht wird.

In der ersten Zeile Rq1 der IPBCP-Request-Nachricht wird durch die erste Media-Gateway-Einheit MGW-A eine dieser zugeordnete Adressinformation, beispielsweise dessen IP Adresse wie "host.anywhere.com" angegeben, zu der die Multiplexverbindung geführt werden soll.

In der zweiten Zeile Rq2 der IPBCP-Request-Nachricht wird durch die erste Media-Gateway-Einheit MGW-A eine in der ersten Media-Gateway-Einheit MGW-A angeordnete freie Port-Nummer angegeben, beispielsweise "49170", welche zum Aufbau einer zum Anfragezeitpunkt noch nicht bestehenden Multiplexverbindung mv verwendet werden kann, aber auch gemäß bestehendem Standard zum Aufbau einer Nutzdatenverbindung außerhalb einer Multiplexverbindung.

Ist keine Multiplexkennung "multiplex" in der vierten Zeile Rq4 der IPBCP-Request-Nachricht vorgesehen, werden standardkonform die angegebene IP-Adresse sowie Port-Nummer zum Aufbau einer einfachen, d.h. nicht gemultiplexten Nutzdatenverbindung vorgesehen. In der ersten Media-Gateway-Einheit MGW-A wird bereits berücksichtigt, dass die zweite Media-Gateway-Einheit MGW-B möglicherweise den mittels die Multiplexkennung "multiplex" angezeigten Zuordnungswunsch nicht unterstützt bzw. nicht entspricht, und die übertragenen IP-Adresse und Port-Nummer zum Aufbau einer einfachen, nicht gemultiplexten Nutzdatenverbindung zur ersten Media-Gateway-Einheit MGW-A verwendet.

Nach Empfang der IPBCP-Request-Nachricht wird durch die zweite Media-Gateway-Einheit MGW-B erfindungsgemäß eine Multiplexverbindung mv zu der empfangenen IP-Adresse "host.anywhere.com" die Port-Nummer der gewünschten Multiplexverbindung in der zweiten Media-Gateway-Einheit MGW-B zugeordnet, beispielsweise die Multiplexverbindung mit der Port-Nummer "49320".

In einer bevorzugten Ausführungsform wird durch die erste und zweite Media-Gateway-Einheit MGW-B der aufzubauenden Nutzdatenverbindung eine Kennung innerhalb der zugeordneten Multiplexverbindung mv zugeordnet - im vorliegenden Ausführungsbeispiel die Kennung "11". Um zu vermeiden, dass dieselbe Kennung zufällig gleichzeitig von der ersten und zweiten Media-Gateway-Einheit MGW-A, MGW-B unterschiedlichen neuen Nutzdatenverbindungen innerhalb derselben Multiplexverbindung zugewiesen wird, werden der ersten und zweiten Media-Gateway-Einheit MGW-A, MGW-B vorzugsweise unterschiedliche Wertebereiche für die Zuweisung der Kennung zugeteilt. Beispielsweise kann diejenige Media-Gateway-Einheit MGW-B, die zuerst einer neuen Multiplexverbindung eine Nutzdatenverbindung zuweist, dadurch den unteren Wertebereich zugewiesen bekommen, während die andere Media-Gateway-Einheit MGW-A den oberen Wertebereich zugewiesen bekommt.

Wird durch die zweite Media-Gateway-Einheit MGW-B festgestellt, dass zur gewünschten IP-Adresse "host.anywhere.com" noch keine Multiplexverbindung mv vorhanden ist, so baut diese mittels einer IPBCP-Response-Nachricht eine neue Multiplexverbindung mv zur IP-Adresse "host.anywhere.com" und der angegebenen Port-Nummer "49170" in der ersten Media-Gateway-Einheit MGW-A auf. In diesem Fall ist die zugeordnete Port-Nummer "49320" eine bisher in der zweiten Media-Gateway-Einheit MGW-B unbenutzte Port-Nummer.

Wird dagegen eine bestehende Multiplexverbindung mv ausgewählt, dann entspricht die zugeordnete Port-Nummer "49320" der zweiten Media-Gateway-Einheit MGW-B der Port-Nummer der bestehenden Multiplexverbindung mv, der in der ersten Media-Gateway-Einheit MGW-A die Port-Nummer "49170" zugewiesen ist.

Die durch die zweite Media-Gateway-Einheit MGW-B ermittelten Informationen zum Aufbau der Nutzdatenverbindung werden mittels der IPBCP-Response-Nachricht der ersten Media-Gateway-Einheit MGW-A angezeigt.

Beispielsweise wird mittels der in der vierten Zeile Rp4 der IPBCP-Response-Nachricht angegebenen Multiplexkennung "multiplex" des MIME-Types des IuFP-Protokols der ersten Media-Gateway-Einheit MGW-A angezeigt, dass die in der IPBCP-Response-Nachricht beschriebenen Nutzdatenverbindung zu einer Multiplexverbindung mv zugeordnet wurde. Durch den zusätzlich übermittelten Parameter "user_connection_id" mit dem Wert "11" wird der ersten Media-Gateway-Einheit MGW-A der von der zweiten Media-Gateway-Einheit MGW-B der Nutzdatenverbindung zugeordnete Kennung innerhalb der Multiplexverbindung mv mitgeteilt.

In der ersten Zeile Rp1 der IPBCP-Response-Nachricht wird die durch die zweite Media-Gateway-Einheit-MGW-B zugeordnete IP-Adresse beispielsweise "host.example.com" angegeben, zu der die Multiplexverbindung mv führt.

In der zweiten Zeile Rp2 der IPBCP-Response-Nachricht wird die durch die zweite Media-Gateway-Einheit MGW-B zugeordnete Port-Nummer "49170" angegeben, an die die Multiplexverbindung mv in der zweiten Media-Gateway-Einheit MGW-B geführt ist. Indirekt bezeichnet diese damit auch die ausgewählte Multiplexverbindung mv. Auch kann die zweite Media-Gateway-Einheit MGW-B die erste Media-Gateway-Einheit MGW-A durch Angabe einer bisher nicht verwendeten Port-Nummer veranlassen, eine neue Multiplexverbindung mv aufzubauen.

Eine fehlende Multiplexkennung "multiplex" in der vierten Zeile Rp4 der IPBCP-Response-Nachricht zeigt der ersten Media-Gateway-Einheit MGW-A an, dass zum Aufbau der Nutzdatenverbindung keine Multiplexverbindung mv verwendet wird, sondern diese analog zum derzeitig standardisiert Verfahren mittels der übertragenen IP-Adresse und der zugehörigen Port-Nummer eine einfache, nicht gemultiplexte Nutzdatenverbindung aufgebaut wird. Eine IPBCP-Response-Nachricht ohne Multiplexkennung "multiplex" würde auch von einer bisher standardsierten Media Gateway einheit MGW-2 gesendet, die die Multiplexkennung "multiplex" in der vierten Zeile Rq4 der IPBCP-Request-Nachricht nicht versteht und daher ignoriert und nur den Transport von Nutzdatenverbindungen außerhalb von Multiplexverbindungen unterstützt.

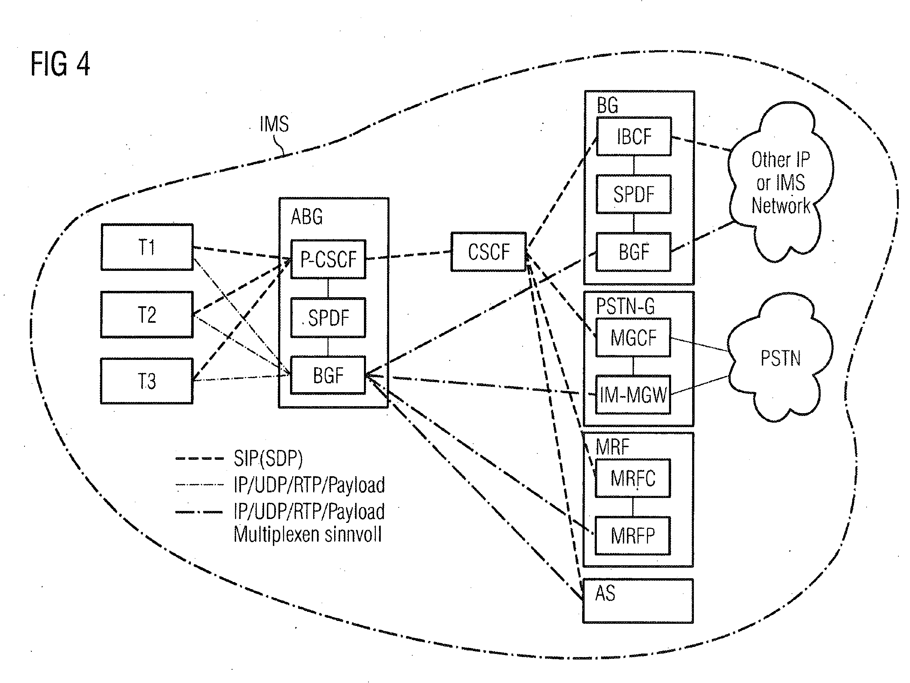

Zur Erläuterung eines alternativer Anwendungsfall für das erfindungsgemäße Verfahren ist in Figur 4 in vereinfachter Darstellung in einem schematischen Blockschaltbild die Netzarchitektur eines "Internet Multimedia Subsystem" (IMS)-basiertes bzw. IMS-Kommunikationssystem IMS dargestellt, welches bereits durch den Standardisierungsbody "Telecoms & Internet converged Services & Protocols for Advanced Networks" (TISPAN) standardisierte Erweiterungen sowie verwendete Protokolle aufweist.

Das IMS-Kommunikationssystem IMS weist beispielsweise erste bis dritte Kommunikationsendgeräte T1 bis T3 auf, welche jeweils das "Session Initiation Protocol" (SIP)-Protokoll SIP unterstützen. Die erste bis dritte Kommunikationsendgeräte T1 bis T3 sind über das SIP-Protokoll SIP (SDP) mit einer so genannten "Access Boarder Gateway" (ABG)-Einheit ABG verbunden und hierdurch an das SIP-Kernnetz angeschlossen.

Gemäß dem durch TISPAN festgelegten Standard werden die der ABG-Einheit ABG standardgemäß zugeordneten Funktionen durch mehrere miteinander verbundene Netzwerkelemente realisiert, und zwar einer so genannten "Proxy Call Session Control Function" (P-CSCF)-Einheit P-CSCF, einer "Service-based Policy Decision Function" (SPDF)-Einheit SPDF und einer "Boarder Gateway Function" (BGF)-Einheit BGF. Hierbei wird basierend auf den SIP-Signalisierungdaten durch die P-CSCF-Einheit P-CSCF die SPDF-Einheit SPDF kontrolliert, welche Ihrerseits wiederum die BGF-Einheit BGF steuert.

Im IMS-Kommunikationssystem IMS können auch so genannte "Application Server" (AS)-Einheiten vorgesehen sein, die ausgewählte Applikationen wie beispielsweise einen "Push-To-Talk"-Kommunikationsdienst zur Verfügung stellen.

Ferner können "Media Ressource Functions" (MRF)-Einheiten MRF vorgesehen werden, welche als Konferenzbrücke dienen und aus zwei Netwerkelementen aufgebaut sind, und zwar einer so genannten MRF-Contröller (MRFC)-Einheit MRFC und einer so genannten MRF-Processor (MRFP)-Einheit MRFP.

Ferner kann das IMS-Kommunikationssystem IMS mittels einer "Boarder Gateway"-(BG)-Einheit BG mit anderen IP- oder IMS-Kommunikationssystemen verbunden sein. Die BG-Einheit BG weist hierzu eine "Interconnection Boarder Control Function" (IBCF)-Einheit IBCF, eine SPDF-Einheit SPDF und eine BGF-Einheit BGF auf.

Mittels einer "PSTN Gateway" (PSTN-G)-Einheit PSTN-G kann das IMS-Kommunikationssystem IMS mit einem "Public Switched Telephone Network", PSTN verbunden werden. Diese weist hierzu eine "Media Gateway Control Function" (MGCF)-Einheit MGCF sowie eine "Internet Multimedia Mediagateway" (IM-MGW)-Einheit IM-MGW auf.

Die SIP-Signalisierung wird im IMS-Kommunikationssystem IMS durch eine "Call Session Control Functions" (CSCF)-Einheit CSCF weitergereicht, wobei das erste bis dritte Kommunikationsendgerät T1 bis T3 über die P-CSCF-Einheit P-CSCF und diese wiederum über die CSCF-Einheit CSCF mit jeweils der IBCF-, MGCF-, MRFC- und AS-Einheit IBCF, MGCF, MRFC, AS SIP-Signalisierungsdaten austauschen, die über das SDP-Protokoll übertragen werden.

Zum Transport von Nutzdaten zwischen den ersten bis dritten Kommunikationsendgerät T1 bis T3, den BGF-Einheiten BGF, der IM-MGW-Einheit IM-MGW, der MRFP-Einheit MRFP und der AS-Einheit AS sind diese mittels dem RTP-, UDP- und IP-Protokoll RTP, UDP, IP miteinander verbunden. Neben den Nutzdaten wird auch das in RFC 3550 standardisierte "Real Time Control Protocol" (RTCP)-Protokoll übertragen. Unterschiedlich zu dem in Figur 1 dargestellten Ausführungsbeispiel der 3GPP CS Domäne wird das IuFP-Protokoll im IMS-Kommunikationssystem IMS nicht verwendet. Jedoch ist auch hier zu erwarten, dass zwischen zwei Netzelementen des IMS-Kernnetzes (jeweils BGF, IM-MGW, MRFP oder AS) viele Nutzdatenverbindungen nahezu gleichzeitig übertragen werden, welche die Bereitstellung einer hohen Bandbreite erfordern. Um Bandbreite einsparen zu können, bietet das Vorsehen von Multiplexverbindungen zur Übertragung von mehreren ähnliche Attribute aufweisenden Nutzdatenverbindungen an.

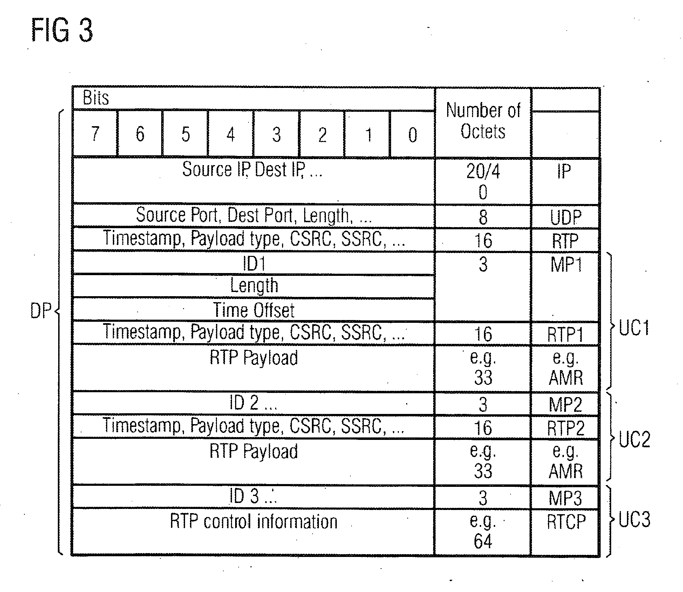

In Figur 3 ist beispielsweise der Aufbau eines Datenpaketes DP einer Multiplexverbindung mv dargestellt zeigt das mögliche Format eines gemultiplexten Datenpakets, wie es beispielsweise an den in Figur 4 angedeuteten Schnittstellen vorgesehen sein könnte. Der Aufbau entspricht weitgehend dem in Figur 2 dargestellten Aufbau. Unterschiedlich hierzu wird jedoch an Stelle der IuFP-Datenfelder IuFP1 bis IuFP3 das RTP-Protokoll unterstützende RTP-Datenfelder RTP1 bzw RTP2 vorgesehen. Dies ist insbesondere aufgrund der als Ende-zu-Ende-Verbindung realisierten Nutzdatenverbindungen erforderlich, um eine Wiederherstellung der Nutzdaten unmittelbar in der Enkodereinheit oder Dekodereinheit beispielsweise im jweiligen Kommunikationsendgerät T1 bis T3 vorsehen zu können.

Neben der gemäß dem RTP-Protokoll übertragenen Nutzdatenverbindungen können auch zugeordnete RTCP-Kontrollverbindungen in einem Datenfeld des gemultiplexten Datenpaketes DP vorgesehen sein. Hierzu wird dieser analog zu den übrigen Nutzdatenverbindung eine Kennung ID3 zugewiesen.

Ferner ist im Header des gemultiplexten Datenpaketes DP ebenfalls ein RTP-Datenfeld RTP vorgesehen. In dem RTP-Datenfeld RTP übertragenen Daten können beispielsweise Informationen über Jitter und Paketverluste auf der Übertragungsstrecke gewonnen werden, welche zwischen den einzelnen Netzelementen im Kernnetz (jeweils BGF, IM-MGW, MRFP oder AS) vorliegen können.

Im Folgenden wird beispielhaft der Aufbau einer "SDP-Offer-Nachricht" und einer "SDP-Answer-Nachricht" gemäß dem Standard IETF RFC 3264 erläutert, welche beispielsweise über das SIP-Signalisierungsprotokoll SIP zwischen beispielsweise zwei Netzwerkelemente bzw. Knotenelementen des IMS-Kernnetzes IMS ausgetauscht werden und die erfindungsgemäße Erweiterungen enthalten.

Als Knotenelemente können beispielsweise die AS-Einheit AS, die BGF-Einheit BGF, die ABG-Einheit ABG, die PSTN-G-Einheit PSTN-G oder eine MRF-Einheit MRF vorgesehen sein. Es wird beispielsweise der in Figur 3 dargestellte Aufbau eines gemultiplexten Datenpaketes DP verwendet.

Unterschiedlich zu dem zuvor beschriebenen Aufbau der IPBCP-Nachrichten dient der im Folgenden dargestellte Nachrichtenaustausch zusätzlich zur Zuordnung der zur Übertragung genützten Kodierverfahren und kann auf mehrere Nutzdatenverbindungen bezogen sein.

| SDP-Offer-Nachricht (Knoten-A -> Knoten-B): | |
|---|---|
| O1 | c=IN IP4 host.anywhere.com |
| O2 | m=audio 49170 RTP/AVP 98 3 96 97 |
| O3 | a=rtpmap:98 VND.3GPP.IUFP/16000 |
| O4 | a=fmtp:98 multiplex |
| O5 | a=rtpmap:97 AMR |
| O6 | a=fmtp:97 mode-set=0,2,5,7; mode-change-period=2 |
| O7 | a=rtpmap:96 telephone-event |

| SDP-Answer-Nachricht (Knoten-B -> Knoten-A): | |
|---|---|
| A1 | c=IN IP4 host.example.com |
| A2 | m=audio 49320 RTP/AVP 98 |
| A3 | a=rtpmap:98 VND.3GPP.IUFP/16000 |
| A4 | a=fmtp:98 multiplex; rtp_payload_types=96,97; user_connection_id=11; rtcp_connection_id=12; |
| A5 | a=rtpmap:97 AMR |
| A6 | a=fmtp:97 mode-set=0,2,5,7; mode-change-period=2 |
| A7 | a=rtpmap:96 telephone-event |

Die "SDP-Offer-Nachricht" wird hierzu von ersten Netzknoten Knoten-A an den zweiten Netzknoten Knoten-B übertragen. Beispielsweise werden in der zweiten Zeile 02 der SDP-Offer-Nachricht unterschiedliche Kodierverfahren, und zwar "GSM-FR", "AMR" sowie "Telephone Event" angegeben. Diese Kodierverfahren werden durch den RTP-Parameter "payload types" durch die Zuordnung der Werte "3", "96" und "97" in der zweiten Zeile 02 der SDP-Offer-Nachricht eingetragen. Die mittels weiterer in der fünften, sechsten und siebten Zeile 05, 06 und 07 vorgesehenen Parameter gemäß dem standardisierten SDP-Protokoll weiter beschrieben werden. Daneben wird in der zweiten Zeile 02 als RTP-Payload-Type der Wert "98" zugewiesen, welcher das gemultiplexte IuFP-Protokoll angibt und das mittels der in dritten und vierten Zeile 03, 04 vorgesehener weiterer Parameter näher beschrieben wird.

Durch den in der vierten Zeile 04 angegebenen Parameter "multiplex" des MIME-Types des IuFP-Protokolls wird durch den die SDP-Offer-Nachricht erzeugenden ersten Netzknoten Knoten-A dem zweiten Netzknoten Knoten-B angezeigt, dass dieser die Zuordnung der in der zweiten Zeile 02 beschriebenen Nutzdatenverbindung(en) zu einer Multiplexverbindung wünscht.

In der ersten Zeile O1 der SDP-Offer-Nachricht wird durch den ersten Netzknoten Knoten-A die diesem zugeordnete IP-Adresse beispielsweise "host.anywhere.com" angezeigt, an welche die Multiplexverbindung mv geführt werden soll.

In der zweiten Zeile 02 der SDP-Offer-Nachricht wird durch den ersten Netzknoten Knoten-A eine diesem zugeordnete freie Port-Nummer beispielsweise die "49170" angegeben, welche für den Aufbau einer neuen Multiplexverbindung verwendet werden könnte. Ist in der SDP-Offer-Nachricht kein "multiplex"-Parameter enthalten, so sind - analog zu dem zuvor beschriebenen Verfahren - die angegebene IP-Adresse und Port-Nummer zum Aufbau einer einfachen, nicht gemultiplexten Nutzdatenverbindung vorzusehen. Falls eine Unterstützung einer Multiplexübertragung und/oder des RTP Payload Types durch das IuFP-Protokoll im zweiten Netzknoten Knoten-B nicht vorgesehen ist, dann kann ebenfalls die IP-Adresse und Port-Nummer für zum Aufbau einer einfachen, nicht gemultiplexten Nutzdatenverbindung zum ersten Netzknoten Knoten-A erfolgen.

Nach Auswertung der SDP-Offer-Nachricht wählt der zweite Netzknoten Knoten-B erfindungsgemäß eine Multiplexverbindung zur IP-Adresse "host.anywhere.com" aus, beispielsweise die Multiplexverbindung mit der Port-Nummer "49320" im zweiten Netzknoten Knoten B.

Der zweite Netzknoten Knoten-B wählt ferner aus den mittels der SDP-Offer-Nachricht angezeigten Kodierverfahren beispielsweise "AMR" und "Telefone event" (RTP payload types 96 und 97) aus. Zusätzlich wird durch dem zweiten Netzknoten Knoten-B in der der Nutzdatenverbindung eine erste Kennung beispielsweise "11" und der zugeordneten RTCP-Verbindung einen weitere Kennung zur Kennzeichnung der Nutzdatenverbindungen beispielsweise "12" zugewiesen.

Für den Fall, dass noch keine Multiplexverbindung zur angegebenen IP-Adresse "host.anywhere.com" besteht, wird diese mittels der SDP-Answer-Nachricht zum zweiten Netzknoten Knoten-B , und zwar zur IP-Adresse "host.anywhere.com" und zur Port-Nummer "49170" im ersten Netzknoten Knoten-A aufgebaut. In diesem Fall ist der Port mit der Nummer "49320" ein bisher von zweiten Netzknoten Knoten-B unbenutzter Port ausgebildet. Bei der Auswahl einer bereits bestehenden Multiplexverbindung mv gibt die Port-Nummer "49320" den im zweiten Netzknoten Knoten-B der Multiplexverbindung mv zugeordnete Port-Nummer und die Port-Nummer "49170" die im ersten Netzknoten Knoten-A dieser Multiplexverbindung bereits zugeordneten Port-Nummer an.

Der zweite Netzknoten Knoten-B erzeugt erfindungsgemäß eine die SDP-Answer-Nachricht und überträgt diese an den ersten Netzknoten Knoten-A, wobei diese folgende Informationen enthält.

In der zweiten Zeile A2 der SDP-Answer-Nachricht wird der ausgewählte RTP-Payload-Type für das IuFP-Protokoll, und zwar beispielsweise "98" und in der vierten Zeile A4 der Parameter "multiplex" des MIME-Types des IuFP-Protokolls angegeben, wodurch dem ersten Netzknoten Knoten-A mitgeteilt mit, dassdie in der SDP Medienzeile A2 beschriebenen Nutzdatenverbindungen zu einer Multiplexverbindung mv zugeordnet ist.

Durch den in vierten Zeile A4 angegebenen Parameter "rtp_payload_types" des MIME-Types des IuFP-Protokoll wird dem ersten Netzknoten Knoten-A durch den zweiten Netzknoten Knoten-B die für diese Nutzdatenverbindung ausgewählten RTP Payload Types beispielsweise "96" für das AMR-Kodierungsverfahren und 97 für das "Telefone-event"-Kodierungsverfahren angezeigt. Die genannten RTP Payload Types werden in der fünten bis siebten Zeile 05 bis 07 näher definiert.

In der vierten Zeile A4 wird der Parameter "u-ser_connection_id" des MIME-Types des IuFP-Protokolls eingefügt, welcher dem ersten Netzknoten Knoten-A anzeigt, dass die in zweiten Zeile A2 beschriebene Nutzdatenverbindung die erste Kennung beispielsweise "11" zugewiesen ist. Durch den in dervierten Zeile A4 angegebenen Parameter "rtcp_connection_id" des MIME-Types des IuFP-Protokolls wird dem ersten Netzknoten Knoten-A angezeigt, dass die in der in zweiten Zeile A2 beschriebene Nutzdatenverbindung zugeordneten RTCP-Verbindung die zweite Kennung beispielsweise "12" zugewiesen ist.

In der ersten Zeile A1 wird die dem zweiten Netzknoten Knoten-B zugeordnete IP-Adresse beispielsweise "host.example.com" zugeordnet, über welche die Multiplexverbindung mv führt und in der zweiten Zeile A2 die Port-Nummer, beispielsweise "49170", angegeben, an welcher die über die Multiplexverbindung übertragenen Datenpakete DP empfangen werden.

Hierbei kann der zweite Netzknoten Knoten-B durch Verwendung einer bisher unbelegten Port-Nummer den ersten Netzknoten Knoten-A anweisen, eine neue Multiplexverbindung hierzu aufzubauen. Falls der "multiplex" Parameter nicht in der SDP-Answer-Nachricht vorgesehen ist, können die übertragenen IP-Adresse und Port-Nummer zum Aufbau einer einfachen, nicht gemultiplexten Nutzdatenverbindung verwendet werden.

Der erste und zweite Netzknoten Knoten-A, Knoten-B können wie in Figur 4 dargestellt jeweils aus einer für die SIP-Signalisierung zuständigen Steuereinheit, beispielsweise der P-CSCF-, IBCF-, MGCF- oder MRFC-Einheit P-CSCF, IBCF, MGCF, MRFC, und einer für die Nutzdatenverbindungen zuständigen Prozessoreinheit, beispielsweise der BGF-, IM-MGW-, oder MRFP-Einheit BGF, IM-MGW, MRFP, zusammengesetzt sein. Prozessoreinheit und Steuereinheit kommunizieren miteinander jeweils beispielsweise gemäß dem ITU-T H.248-Standards. In einer bevorzugten Ausführungsform ist die Prozessoreinheit für die Verwaltung der Multiplexverbindungen mv sowie der Zuteilung der Adressinformationen der Nutzdatenverbindungen zuständig.

Vor der Übertragung der SDP-offer-Nachricht tauschen die Steuereinheit und die Prozessoreinheit des jeweiligen Netzknotens Knoten-A, Knoten-B gemäß bestehenden Standard untereinander Nachrichten aus. Die Prozessoreinheit teilt der Steuereinheit insbesondere seine IP-Adresse beispielsweise "host.anywhere.com" sowie die ihm zugewiesene Port-Nummer beispielsweise "49170" mit. Die Signalisierung wird ferner dahingehen erweitert, dass durch die Prozessoreinheit gegenüber der Steuereinheit angezeigt wird, dass diese den Einsatz einer Multiplexverbindung wünscht. Beispielsweise kann hierzu der RTP-Payload in das IuFP-Protokoll gemäß der zweiten bis vierten Zeilen 02 bis 04 über eine ausgewählte H.248-Nachricht von der Prozessoreinheit an die Steuereinheit übertragen werden.

Zwischen Empfang der SDP-Offer-Nachricht und Senden der SDP-Answer-Nachricht werden zwischen der Steuereinheit und der Prozessoreinheit des jeweiligen Netzknotens Knoten-A, Knoten-B gemäß bestehenden Standard Nachrichten ausgetauscht. Beispielsweise teilt die Prozessoreinheit darin bereits die in der SDP-Offer-Nachricht empfangene IP-Adresse sowie die empfangene Portnummer mit. In einer bevorzugten Ausführungsform wird der Prozessoreinheit durch die Steuereinheit auch signalisiert, dass Multiplexing gewünscht ist. Diese erfolgt beispielsweise durch Weiterreichen des RTP-Payloads für das I-uFP-Protokoll gemäß der zweiten bis vierten Zeilen 02 bis 04 mittels einer geeigneten H.248-Nachricht.

Durch die Prozessoreinheit wird daraufhin die Multiplexverbindung ausgewählt und der Nutzdatenverbindungen die zugehörige Kennung zugewiesen. Die Prozessoreinheit teilt der Steuereinheit bereits seine IP-Adresse und die ihm zugewiesene Port-Nummer mit.

Falls sich eine SPDF zwischen Steuereinheit und Prozessoreinheit befindet, reicht diese die beschriebenen Informationen jeweils weiter.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- ABG: Access Boarder Gateway-Einheit
- AN1: erstes Zugangsnetz
- AN2: zweites Zugangsnetz
- AS: Application Server-Einheiten
- BG: Boarder Gateway-Einheit
- BGF: Boarder Gateway Function-Einheit
- IBCF: Interconnection Boarder Control Function-Einheit
- ID1: erste Adressinformation
- ID2: zweite Adressinformation
- ID3: dritte Adressinformation
- IM-MGW: Internet Multimedia Mediagateway-Einheit
- IMS: IMS basierten Kommunikationssystem
- IP: IP-Datenfeld
- Iu: Iu-Datenverbindung
- IuFP1: erstes IuFP-Datenfeld
- IuFP2: zweites IuFP-Datenfeld
- IuFP3: drittes IuFP-Datenfeld
- KAT1: erstes mobiles Kommunikationsendgerät
- KBT2: zweites mobiles Kommunikationsendgerät
- MKS: mobiles Kommunikationssystem
- MGCF: Media Gateway Control Function-Einheit
- MGW-A: erste Media-Gateway-Einheit
- MGW-B: zweite Media-Gateway-Einheit
- MGW-T: dritte Media-Gateway-Einheit
- MKD: Kommunikationsdienst
- MKD: multimediadatenbasierter Kommunikationsdienst
- MP1: erstes Multiplexdatenfeld
- MP2: zweites Multiplexdatenfeld
- MP3: drittes Multiplexdatenfeld
- MRF: Media Ressource Functions-Einheiten
- MRFC: MRF-Controller-Einheit
- MRFP: MRF-Processor-Einheit
- MSC-A: erste Mobilvermittlungseinheit
- MSC-B: zweite Mobilvermittlungseinheit
- MSC-S-A: erste MSC-Server-Einheit
- MSC-S-B: zweite MSC-Server-Einheit
- mv: Multiplexverbindungen
- Nb: Nb-Datenverbindung
- P-CSCF: Proxy Call Session Control Function-Einheit
- PSTN: Public Switched Telephone Network
- PSTN-G: PSTN Gateway-Einheit
- RAB: RAB-Parameter
- RNC: Radio-Network-Controller-Einheit
- RTP: RTP-Datenfeld
- SIP: Session Initiation Protocol-Protokoll
- SPDF: Service-based Policy Decision Function-Einheit
- T3: drittes Kommunikationsendgerät
- UC1: ersten Nutzdatenverbindung
- UC2: zweite Nutzdatenverbindung
- UC3: dritte Nutzdatenverbindung
- UDP: UDP-Datenfeld

## Patentansprüche

1. Verfahren zur Zuordnung von zumindest einer Nutzdatenverbindungen zu zumindest einer zwischen einem ersten Netzwerkelement (MSC-A) und zweiten Netzwerkelement (MSC-B) vorgesehenen Multiplexverbindung,
**dadurch gekennzeichnet,**
**dass** durch das erste Netzwerkelement (MSC-A) eine erste Signalisierungsnachricht erzeugt und an das zweite Netzwerkelement (MSC-B) übertragen wird, wobei durch die erste Signalisierungsnachricht dem zweiten Netzwerkelement (MSC-A) die Bereitschaft des ersten Netzwerkelementes (MSC-A) zum Transport der zumindest einen Nutzdatenverbindung über jeweils eine Multiplexverbindung angezeigt wird,
**dass** abhängig von der angezeigten Bereitschaft des ersten Netzwerkelementes (MSC-A) und davon, ob der Transport der zumindest einen Nutzdatenverbindung über eine Multiplexverbindung durch das zweite Netzwerkelement (MSC-B) unterstützt wird, das zweite Netzwerkelement (MSC-B) jeder der zumindest einen Nutzdatenverbindungen jeweils entweder einer Multiplexverbindung zwischen dem ersten Netzwerkelement (MSC-A) und dem zweiten Netzwerkelement (MSC-B) zuordnet oder für diese Nutzdatenverbindung einen Transport außerhalb einer Multiplexverbindung wählt und
**dass** durch eine im zweiten Netzwerkelement (MSC-B) erzeugte und an das erste Netzwerkelement (MSC-A) übertragene zweite Signalisierungsnachricht dem ersten Netzwerkelement (MSC-A) die mögliche Zuordnung der zumindest einen Nutzdatenverbindung zu einer Multiplexverbindung (mv) angezeigt wird.

2. Verfahren nach Anspruch 1,
**dadurch gekennzeichnet,**
**dass** die Bereitschaft des ersten Netzwerkelementes (MSC-A) zum Transport der zumindest einen Nutzdatenverbindung über eine Multiplexverbindung mittels einer in der ersten Signalisierungsnachricht vorgesehenen Multiplexkennung angezeigt wird.

3. Verfahren nach einem der Ansprüche 1 oder 2,
**dadurch gekennzeichnet,**
**dass** in der ersten Signalisierungsnachricht eine dem ersten Netzknotenelement (MSC-A) zugeordnete erste Adressinformation übertragen wird.

4. Verfahren nach einem der Ansprüche 1 bis 3,
**dadurch gekennzeichnet,**
**dass** das zweite Netzwerkelement (MSC-B) die zugeordnete Multiplexverbindung mit Hilfe der in der ersten Signalisierungsnachricht enthaltenen ersten Adressinformation auswählt.

5. Verfahren nach einem der Ansprüche 1 bis 4,
**dadurch gekennzeichnet,**
**dass** bei mehreren zum Aufbau der Nutzdatenverbindung verfügbarer Multiplexverbindungen zwischen dem ersten Netzwerkelement (MSC-A) und dem zweiten Netzwerkelement (MSC-B) durch das zweite Netzwerkelement (MSC-B) eine dieser Multiplexverbindungen zugeordnet wird, welche ausreichend freie Übertragungsressourcen für den Transport der Nutzdatenverbindung aufweist.

6. Verfahren nach einem der Ansprüche 1 bis 5,
**dadurch gekennzeichnet,**
**dass** die Multiplexverbindung automatisch und dynamisch eingerichtet wird.

7. Verfahren nach einem der Ansprüche 1 bis 6,
**dadurch gekennzeichnet,**
**dass** durch die durch das zweite Netzwerkelement (MSC-B) vorgenommen Zuordnung einer Multiplexverbindung (mv) der dynamische Aufbau dieser Multiplexverbindungen veranlasst wird.

8. Verfahren nach Anspruch 1 bis 7,
**dadurch gekennzeichnet,**
**dass** der neu dynamisch aufgebauten Multiplexverbindung (mv) zum Empfang von Daten auf Seiten des ersten Netzwerkelementes (MSC-A) eine in der ersten Signalisierungsnachricht enthaltene UDP Port-Nummer zugewiesen wird, und dass einer bereits bestehenden Multiplexverbindung eine bereits vorher zugewiesene UDP-Port-Nummer zugewiesen bleibt.

9. Verfahren nach Anspruch 1 bis 8,
**dadurch gekennzeichnet,**
**dass** die Zuordnung der zumindest einen Nutzdatenverbindung zu einer Multiplexverbindung dem ersten Netzwerkelement (MSC-A) mittels einer in der zweiten Signalisierungsnachricht vorgesehenen Multiplexkennung angezeigt wird.

10. Verfahren nach Anspruch 1 bis 9,
**dadurch gekennzeichnet,**
**dass** in der zweiten Signalisierungsnachricht die zugeordnete Multiplexverbindung (mv) vorzugsweise mittels einer UDP-Port-Nummer angezeigt wird.

11. Verfahren nach einem der Ansprüche 1 bis 10,
**dadurch gekennzeichnet,**
**dass** durch das zweite Netzwerkelement (MSC-B) der einer Multiplexverbindung (mv) zugeordneten Nutzdatenverbindung eine Kennung zugeordnet wird.

12. Verfahren nach Anspruch 11,
**dadurch gekennzeichnet,**
**dass** die Kennung in der zweiten Signalisierungsnachricht dem ersten Netzwerkelement (MSC-A) angezeigt wird.

13. Verfahren nach Anspruch 11 oder 12,
**dadurch gekennzeichnet,**
**dass** die Kennung jeweils in einem Datenfeld eines Datenpaktes (DP) der Multiplexverbindung (mv) übertragen wird.

14. Verfahren nach einem der Ansprüche 1 bis 13,
**dadurch gekennzeichnet,**
**dass** zum Aufbau einer Nutzdatenverbindung in einem Mobilfunksystem (MKS) eine IPBCP-Request-Nachricht und eine IPBCP-Response-Nachricht zwischen den jeweils als Mobilvermittlungseinheit (MSC-A, MSC-B) ausgebildeten und über eine BICC-Signalisierungsverbindung miteinander verbundenen Netzwerkelementen ausgetauscht wird.

15. Verfahren nach einem der Ansprüche 11 bis 14,
**dadurch gekennzeichnet,**
**dass** als Multiplexkennung ein "Session Description Protocol" (SDP)-Attribut oder ein gemäß dem Standard TS 29.414 ausgebildeter "Multimedia Internet Message Extension" (MIME)-Parameter übertragen wird.

16. Verfahren nach einem der Ansprüche 9 bis 15,
**dadurch gekennzeichnet,**
**dass** bei einer fehlenden Unterstützung des Aufbaus der Nutzdatenverbindung über eine Multiplexverbindung durch die zweite Mobilvermittlungseinheit (MSC-B) eine einfache Datenverbindung zwischen den angegebenen IP-Adressen und Port-Nummern aufgebaut wird.

17. Verfahren nach einem der Ansprüche 1 bis 16,
**dadurch gekennzeichnet,**
**dass** zum Aufbau einer Nutzdatenverbindung in einem IMSbasierten Kommunikationssystem (IMS) eine SDP-Offer-Nachricht und eine SDP-Answer-Nachricht zwischen den über eine SIP-Signalisierungsverbindung miteinander verbundenen Netzwerkelementen ausgetauscht wird.

18. Verfahren nach Anspruch 17,
**dadurch gekennzeichnet,**
**dass** als Multiplexkennung ein "Session Description Protocol" (SDP)-Attribut oder ein gemäß dem Standard TS 29.414 ausgebildeter "Multimedia Internet Message Extension" (MIME)-Parameter übertragen wird.

19. Verfahren nach einem der Ansprüche 1 bis 18,
**dadurch gekennzeichnet,**
**dass** die jeweilige Multiplexverbindung (mv) durch jeweils das erste und zweite Netzwerkelement (MSC-A, MSC-B) terminiert wird.

## Claims

1. Method for allocating at least one payload data connection to at least one multiplex connection which is provided between a first network element (MSC-A) and a second network element (MSC-B),
**characterised in that**
a first signalling message is generated by the first network element (MSC-A) and transmitted to the second network element (MSC-B), wherein the readiness of the first network element (MSC-A) to transport the at least one payload data connection via a multiplexed connection in each case is indicated to the second network element (MSC-B) by means of the first signalling message,
that depending on the indicated readiness of the first network element (MSC-A) and on whether the transport of the at least one payload data connection via a multiplexed connection is supported by the second network element (MSC-B), the second network element (MSC-B) either allocates each of the at least one payload data connections in each case to a multiplexed connection between the first network element (MSC-A) and the second network element (MSC-B) or selects a transport outside of a multiplexed connection for this payload data connection, and
that by means of a second signalling message which is generated in the second network element (MSC-B) and transmitted to the first network element (MSC-A), the possible allocation of the at least one payload data connection to a multiplexed connection (mv) is indicated to the first network element (MSC-A).

2. Method according to claim 1,
**characterised in that**
the readiness of the first network element (MSC-A) to transport the at least one payload data connection via a multiplexed connection is indicated by means of a multiplexing identification code in the first signalling message.

3. Method according to one of the claims 1 or 2,
**characterised in that**
address information which has been allocated to the first network element (MSC-A) is transmitted in the first signalling message.

4. Method according to one of the claims 1 to 3,
**characterised in that**
the second network element (MSC-B) selects the allocated multiplexed connection with the aid of the address information which is contained in the first signalling message.

5. Method according to one of the claims 1 to 4,
**characterised in that**
if a plurality of multiplexed connections are available between the first network element (MSC-A) and the second network element (MSC-B), the second network element (MSC-B) allocates one of these multiplexed connections which has sufficient free transmission resources for the transport of the payload data connection.

6. Method according to one of the claims 1 to 5,
**characterised in that**
the multiplexed connection is set up automatically and dynamically.

7. Method according to one of the claims 1 to 6,
**characterised in that**
the dynamic establishment of these multiplexed connections is triggered by the second network element (MSC-B) allocating a multiplexed connection (mv).

8. Method according to claims 1 to 7,
**characterised in that**
the newly dynamically established multiplexed connection (mv) for receiving data on the first network element side (MSC-A) is assigned a UDP port number which is contained in the first signalling message, and that a previously assigned UDP port number remains assigned to an already existing multiplexed connection.

9. Method according to claims 1 to 8,
**characterised in that**
the allocation of the at least one payload data connection to a multiplexed connection is indicated to the first network element (MSC-A) by means of a multiplexing identification code which is provided in the second signalling message.

10. Method according to claims 1 to 9,
**characterised in that**
the allocated multiplexed connection (mv) is preferably indicated in the second signalling message by means of a UDP port number.

11. Method according to one of the claims 1 to 10,
**characterised in that**
the second network element (MSC-B) allocates an identification code to the payload data connection which is allocated to a multiplexed connection (mv).

12. Method according to claim 11,
**characterised in that**
the identification code is indicated to the first network element (MSC-A) in the second signalling message.

13. Method according to claim 11 or 12,
**characterised in that**
the identification code in each case is transmitted in a data field of a data packet (DP) of the multiplexed connection (mv).

14. Method according to one of the claims 1 to 13,
**characterised in that**
for the purpose of establishing a payload data connection in a mobile radio system (MKS), an IPBCP Request Message and an IPBCP Response Message are exchanged between the network elements, these being designed in each case as Mobile Switching Centres (MSC-A, MSC-B) and being connected together via a BICC signalling connection.

15. Method according to one of the claims 11 to 14,
**characterised in that**
a "Session Description Protocol" (SDP) attribute or a "Multimedia Internet Message Extension" (MIME) parameter as per the standard TS 29.414 is transmitted as a multiplexing identification code.

16. Method according to one of the claims 9 to 15,
**characterised in that**
if the second Mobile Switching Centre (MSC-B) does not support the establishment of the payload data connection via a multiplexed connection, a simple data connection between the specified IP addresses and port numbers is established.

17. Method according to one of the claims 1 to 16,
**characterised in that**
for the purpose of establishing a payload data connection in an IMS-based communication system (IMS), an SDP Offer Message and an SDP Answer Message are exchanged between the network elements, these being connected together via a SIP signalling connection.

18. Method according to claim 17,
**characterised in that**
a "Session Description Protocol" (SDP) attribute or a "Multimedia Internet Message Extension" (MIME) parameter as per the standard TS 29.414 is transmitted as a multiplexing identification code.

19. Method according to one of the claims 1 to 18,
**characterised in that**
the relevant multiplexed connection (mv) is terminated by the first and second network elements (MSC-A, MSC-B) in each case.

## Revendications

1. Procédé d'attribution d'au moins une liaison de données utiles à au moins une liaison multiplex prévue entre un premier élément de réseau (MSC-A) et un second élément de réseau (MSC-B),
**caractérisé en ce**
**qu'**un premier message de signalisation est généré par le premier élément de réseau (MSC-A) et est transmis au second élément de réseau (MSC-B), la disponibilité du premier élément de réseau (MSC-A) pour le transport de l'au moins une liaison de données utiles par l'intermédiaire de respectivement une liaison multiplex étant indiquée au second élément de réseau (MSC-B) au moyen du premier message de signalisation,
en ce qu'en fonction de la disponibilité indiquée du premier élément de réseau (MSC-A) et en fonction du fait de savoir si le transport de l'au moins une liaison de données utiles par l'intermédiaire d'une liaison multiplex est supporté par le second élément de réseau (MSC-B), le second élément de réseau (MSC-B) soit attribue à chacune de l'au moins une liaison de données utiles respectivement une liaison multiplex entre le premier élément de réseau (MSC-A) et le second élément de réseau (MSC-B) soit sélectionne pour cette liaison de données utiles un transport en dehors d'une liaison multiplex et
en ce qu'en raison d'un second message de signalisation généré dans le second élément de réseau (MSC-B) et transmis au premier élément de réseau (MSC-A), l'attribution possible de l'au moins une liaison de données utiles à une liaison multiplex (mv) est indiquée au premier élément de réseau (MSC-A).

2. Procédé selon la revendication 1,
**caractérisé en ce**
**que** la disponibilité du premier élément de réseau (MSC-A) pour le transport de l'au moins une liaison de données utiles par l'intermédiaire d'une liaison multiplex est indiquée au moyen d'une identification multiplex prévue dans le premier message de signalisation.

3. Procédé selon l'une quelconque des revendications 1 ou 2,
**caractérisé en ce**
**qu'**une première information d'adresse attribuée au premier élément de noeud de réseau (MSC-A) est transmise dans le premier message de signalisation.

4. Procédé selon l'une quelconque des revendications 1 à 3,
**caractérisé en ce**
**que** le second élément de réseau (MSC-B) sélectionne la liaison multiplex attribuée à l'aide de la première information d'adresse contenue dans le premier message de signalisation.

5. Procédé selon l'une quelconque des revendications 1 à 4,
**caractérisé en ce**
**qu'**avec plusieurs liaisons multiplex, disponibles pour l'établissement de la liaison de données utiles, entre le premier élément de réseau (MSC-A) et le second élément de réseau (MSC-B), une de ces liaisons multiplex est attribuée par le second élément de réseau (MSC-B), laquelle présente suffisamment de ressources de transmission libres pour le transport de la liaison de données utiles.

6. Procédé selon l'une quelconque des revendications 1 à 5,
**caractérisé en ce**
**que** la liaison multiplex est configurée automatiquement et dynamiquement.

7. Procédé selon l'une quelconque des revendications 1 à 6,
**caractérisé en ce**
**qu'**en raison de l'attribution d'une liaison multiplex (mv), effectuée par le second élément de réseau (MSC-B), l'établissement dynamique de ces liaisons multiplex est initié.

8. Procédé selon l'une quelconque des revendications 1 à 7,
**caractérisé en ce**
**qu'**un numéro de port UDP contenu dans le premier message de signalisation est affecté à la liaison multiplex (mv) établie nouvellement de manière dynamique pour la réception de données du côté du premier élément de réseau (MSC-A), et en ce qu'un numéro de port UDP attribué auparavant reste attribué à une liaison multiplex déjà existante.

9. Procédé selon l'une quelconque des revendications 1 à 8,
**caractérisé en ce**
**que** l'attribution de l'au moins une liaison de données utiles à une liaison multiplex est indiquée au premier élément de réseau (MSC-A) au moyen d'une identification multiplex prévue dans le second message de signalisation.

10. Procédé selon l'une quelconque des revendications 1 à 9,
**caractérisé en ce**
**que,** dans le second message de signalisation, la liaison multiplex (mv) attribuée est indiquée de préférence au moyen d'un numéro de port UDP.

11. Procédé selon l'une quelconque des revendications 1 à 10,
**caractérisé en ce**
**qu'**une identification est attribuée à une liaison de données utiles affectée à une liaison multiplex (mv) par le second élément de réseau (MSC-B).

12. Procédé selon la revendication 11,
**caractérisé en ce**
**que** l'identification est indiquée au premier élément de réseau (MSC-A) dans le second message de signalisation.

13. Procédé selon la revendication 11 ou 12,
**caractérisé en ce**
**que** l'identification est respectivement transmise dans un champ de données (DP) de la liaison multiplex (mv).

14. Procédé selon l'une quelconque des revendications 1 à 13,
**caractérisé en ce**
**que** pour l'établissement d'une liaison de données utiles dans un système de radiocommunication mobile, un message de demande IPBCP et un message de réponse IPBCP sont échangés entre les éléments de réseau réalisés respectivement en tant qu'unité de commutation mobile (MSC-A, MSC-B) et connectés entre eux par l'intermédiaire d'une liaison de signalisation BICC.

15. Procédé selon l'une quelconque des revendications 11 à 14,
**caractérisé en ce**
**qu'**un attribut « Session Description Protocol » (SDP) ou un paramètre « Multimedia Internet Message Extension » (MIME) réalisé selon la norme TS 29.414 est transmis en tant qu'identification multiplex.

16. Procédé selon l'une quelconque des revendications 9 à 15,
**caractérisé en ce**
**qu'**en cas d'un support manquant de l'établissement de la liaison de données utiles, une liaison de données simple est établie entre les adresses IP indiquées et les numéros de port par la seconde unité de commutation mobile (MSC-B) par l'intermédiaire d'une liaison multiplex.

17. Procédé selon l'une quelconque des revendications 1 à 16,
**caractérisé en ce**
**que** pour l'établissement d'une liaison de données utiles dans un système de communication (IMS) basé IMS, un message d'offre SDP et un message de réponse SDP sont échangés entre les éléments de réseau connectés entre eux par l'intermédiaire d'une liaison de signalisation SIP.

18. Procédé selon la revendication 17,
**caractérisé en ce**
**qu'**un attribut « Session Description Protocol » (SDP) ou un paramètre « Multimedia Internet Message Extension » (MIME) réalisé selon la norme TS 29.414 est transmis en tant qu'identification multiplex.

19. Procédé selon l'une quelconque des revendications 1 à 18,
**caractérisé en ce**
**que** la liaison multiplex respective (mv) est terminée par respectivement le premier et le second éléments de réseau (MSC-A, MSC-B).
